# EUROPEAN PATENT SPECIFICATION

(11) **EP 1 288 112 B1**
(45) Date of publication and mention of the grant of the patent: **03.05.2006**
(21) Application number: 01830559.9
(22) Date of filing: 30.08.2001
(51) Int. Cl.: B62D 33/04

(54) **A set of elements for the rapid assembly of truck bodies for means of transport**
Bausatz aus ineinander einsteckbaren Elementen für einen schnellen Zusammenbau van Kraftfahrzeugkästen
Ensemble d'éléments de construction en coin emboitables pour carrosseries de camions

(43) Date of publication of application: 05.03.2003
(73) Proprietor: Univan S.p.A., 47023 Cesena (FC) (IT); Cargo Van S.A., 45303 Pithiviers Cedex (FR)
(72) Inventor: Menci, Pietro, 52043 Castiglion Fiorentino (Arezzo) (IT); Rossi, Sergio, 61100 Pesaro (IT); Souchon, Jean, 42740 S. Paul en Jarez (FR)
(74) Representative: Lanzoni, Luciano

(56) References cited:
- DE-U- 9 418 262
- FR-A- 2 717 868
- NL-A- 9 200 339
- US-A- 3 039 649
- US-A- 5 553 906

## Description

The present invention relates to a set of elements for the rapid assembly of truck bodies for means of transport.

In particular, the present invention relates to a set of elements for the assembly of truck bodies for means of transport which are heat insulated and easily assembled by the end user.

In general, heat insulated truck bodies are used for the transportation of perishable goods (normally foodstuffs), which are preserved by keeping a given temperature constant, within given limits, inside the truck body. Said heat insulated truck bodies are, for this reason, also called "isothermal truck bodies" and are mainly classed according to the value of an overall heat transfer coefficient, indicated generically as K, defined in accordance with international standards and measured in W/m²°K. The size of the cooling and/or heating system required to maintain a constant temperature difference between the inside and the outside, therefore, depends on the heat transfer coefficient value K.

The prior art regarding the assembly of isothermal truck bodies consists of a vast range of systems for the construction of the truck body. However, all systems for body construction basically consist in the assembly of a set of heat insulating panels. The panels may be made in various ways (sheets of polyurethane coated with fibreglass, honeycomb structures, wooden panels which are sometimes coated, etc.). They are normally made of compound material, that is to say, polyurethane, fibreglass and resins (for example, in the form of a layer of polyurethane which may be reinforced with fibreglass and resins, enclosed in a fibreglass sheath normally obtained by moulding). The panels are often very thick and heavy.

Two horizontal panels form the floor and ceiling of the truck body, two vertical panels form the side walls, a fifth, vertical panel seals the front and a full cross-section rear frame supports the rear door used for loading and unloading goods. The structural joining of the panels, in particular the connection of the four longitudinal edges of the body (in addition to those at the front), is a critical step of body construction, since it may determine both the quality of the end product and the ease of assembly.

There are various types of angle joints for the right angle connection of panels forming the isothermal bodies. The set of panel joining systems can normally be defined as three methods.

The first method, also known as the "direct rigid joint", involves the creation of a joint by directly overlapping the panels at the sides adjacent to an edge of the body. The joint is made using putty and adhesives, normally loaded with fibreglass.

This type of joint is complicated to make with any degree of precision without the use of special tools, which are sometimes large. It must normally be made at the works, at the panel manufacturer's premises, the manufacturer preparing it and forming its shape so that it is suitable for connection to the adjacent panel. Further fixing and reinforcing elements may consist of screw connections involving the insertion of metal inserts in the panel. The finished body is sold to the end user ready-assembled and must be shipped in its assembled state, with the consequent obvious space problems on the means of transport used for this purpose.

The second method, known as the "rigid joint with monolithic structural profile", involves a right angle connection between the panels, created with the aid of a single monolithic rigid profile with two seats for panel connection, to which the panels are fixed with adhesives during construction of the truck body. The profile may be a monolithic structural profile made of a compound material (for example, pultruded fibreglass and resin), or a monolithic structural profile made of aluminium alloy, which may feature a thermal break to guarantee heat insulation even at the edges of the truck body.

Connection of the panels to the monolithic profile is quite complicated and requires the use of bulky assembly means (templates, bridge cranes, tools). Moreover, since the joints between two panels created with a single rigid monolithic profile immediately eliminate even the smallest degree of panel freedom at the joint, the increase in structural rigidity each time a panel is added to form the final truck body is such that it makes the operation even more difficult. For this reason, the truck body is normally assembled at the works and sold ready-assembled, with the same problems as for the previous case.

A third type of construction is widespread in the market for small and medium-sized isothermal truck bodies (up to around 7 metres long), called the "assembly kit". To avoid transporting the truck body ready-assembled, this method involves the sale, directly to the truck body assembler or end user, of a set of elements which are combined to assemble the truck body even directly on the vehicle on which it will be used.

Although used in a wide variety of different solutions, said set of elements normally comprises panels made of an insulating material (for example, moulded fibreglass) with rough, undefined edges, that is to say, outside the size tolerances.

The panels are joined at right angles to one another using monolithic profiles (normally made of aluminium) which, although available in various shapes and sizes, using adhesives and/or rivets, simultaneously connect to two panels on the side of the panels facing the outside (or inside) of the truck body. The angle joint between two panels thus obtained is reinforced with another monolithic profile, again simultaneously connected to two panels, but on the side of the panels facing the inside (or outside) of the truck body. The kit sometimes includes a third profile inside the joint, or suitable internal spacers. This is often all reinforced using screws, brackets, rivets or other fixing systems.

Documents FR 2717868, for example, shows a device for assembling panels which is made of two "L"-shaped elements, which are fixed to panels with glue and are interlocked with a tongue and groove system. The resulting structure is then reinforced with another "L"-shaped profile placed on the internal angle formed by two assembled panels.

Also document DE 9418262 which shows the features of the preamble of claim 1 describes a similar assembling system, but it is meant for making a structural profile for carrying goods which does not need thermal isolation.

In this type of joint the individual profiles do not have any thermal breaks. Heat insulation at the edges of the truck body is guaranteed by the existence of a gap between the internal and external profiles, creating a physical separation.

Given that the monolithic profiles used always connect two panels simultaneously, these sets of elements are sold by the assembly "kit" manufacturers with the rough panels separate from the joint profiles and connecting means. The whole assembly is, therefore, delegated to the end user, who must use a semi-manual truck body assembly method (directly on the vehicle if necessary).

This involves, amongst other things, many hours of work to assemble the truck body and numerous items of equipment and small tools, as well as a high level of operator expertise for creating right angles at the vertices.

All of the truck body assembly difficulties present in the first two types of methods remain substantially unchanged and are transferred to the end user who, in turn, may not have the tools needed for correct assembly. Therefore, the truck bodies obtained many not be perfectly assembled and, as a result, do not conform perfectly to the required standards, for example for the transportation of perishable goods. Moreover, problems relating to the structure of the product mean that heat insulation at the edges of the truck body corresponding to the desired values of the heat transfer coefficient K cannot always be guaranteed.

The aim of the present invention is to overcome the above-mentioned disadvantages by providing a set of elements for the rapid assembly of truck bodies for means of transport, which allows the end user to avoid complicated, precision connecting operations between profiles and panels and to connect the front, sides, ceiling and floor of the truck body in a simple, rapid fashion, maintaining the precision of the final assembly.

Another aim of the present invention is to provide a set of elements for the rapid assembly of truck bodies for means of transport, which allows users to obtain a structurally stable truck body without the need to completely stiffen the connections between the various elements before complete assembly of the truck body.

Another aim of the present invention is to provide a set of elements for the rapid assembly of truck bodies for means of transport, which does not oblige the end user to use complicated tools and manoeuvres in order to align and connect the various components.

Another aim of the present invention is to provide a set of elements for the rapid assembly of truck bodies for means of transport, which allows users to obtain a structurally stable truck body with heat insulation even at the edges.

Another aim of the present invention is to provide a set of elements for the rapid assembly of truck bodies for means of transport, which allows users to obtain a structurally stable truck body with heat insulation even at the edges and with a high level of heat inertia.

These aims and others, which appear in the description that follows, are fulfilled in accordance with the present invention by a set of elements for the rapid assembly of truck bodies for means of transport as described in the claims herein. The present invention is now described in detail, with reference to the accompanying drawings, which illustrate a preferred embodiment without limiting the scope of the claims, and in which:
- Figure 1 illustrates an example of a joint between two panels (in particular a side and the floor or ceiling) made using two half-sections from the set of elements which forms the subject matter of the present invention;
- Figure 2 illustrates the elements shown in Figure 1 before the two half-sections are joined together;
- Figure 3 illustrates an example of a joint, obtained between the front and the floor (or ceiling);
- Figure 4 illustrates the elements shown in Figure 3 before the two half-sections are joined together;
- Figure 5 illustrates a degree of freedom allowed by the joint between two panels before assembly of the other panels;
- Figure 6 illustrates a particularly advantageous geometry for the cross-section of the joint section obtained after joining the two half-sections;
- Figure 7 is a complete cross-section in a vertical plane of a truck body obtained using the set of elements in accordance with the present invention;
- Figure 8 is a longitudinal section in a horizontal plane, with some elements highlighted in detail, of a truck body obtained using the set of elements in accordance with the present invention;
- Figure 9 is a longitudinal section in a vertical plane, with some elements highlighted in detail, of a truck body obtained using the set of elements in accordance with the present invention;
- Figure 10 is a detail of the finishing section which supports the rear door;
- Figures 11 a, b, c, d, e, f, g, h, i, l, m, n illustrate a truck body assembly sequence using the set of elements in accordance with the present invention;
- Figure 12 illustrates a strengthening bracket which is part of the set of elements in accordance with the present invention and its insertion in the seats specially prepared in a finishing section;
- Figure 13 illustrates a detail of the finishing section, indicating the plane of the cross-section illustrated in Figure 12.

With reference to the accompanying drawings, the set of elements for the rapid assembly of vehicle truck bodies disclosed comprises heat insulating panels 1, which are substantially rectangular and have rough outer edges 11. The panels respectively form a front 20, a first and second side 21, 22, a ceiling 23 and a floor 24 of a truck body 2 to be assembled. There is also at least one heat insulating rear door 26 for the truck body 2 to be assembled, which may be made of heat insulating sheets of the same type as those used for the panels 1, or any other structure suited to the purpose.

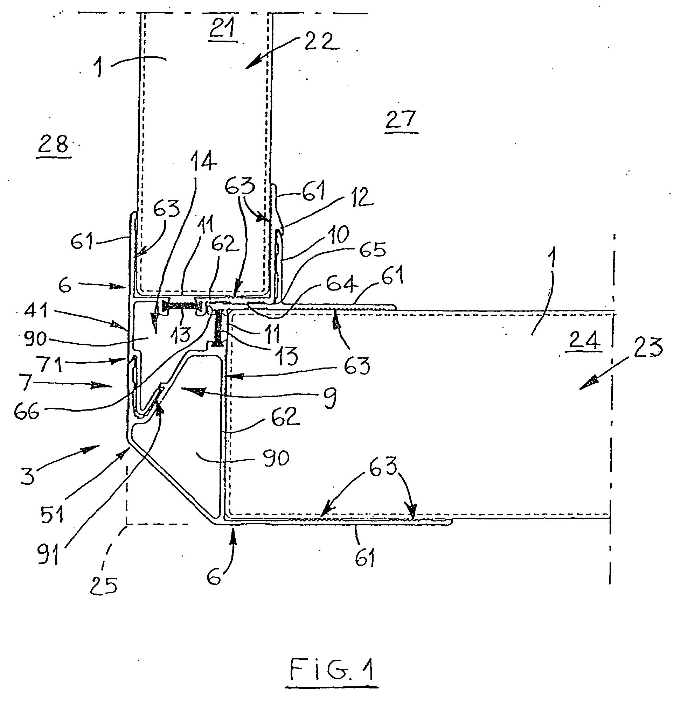

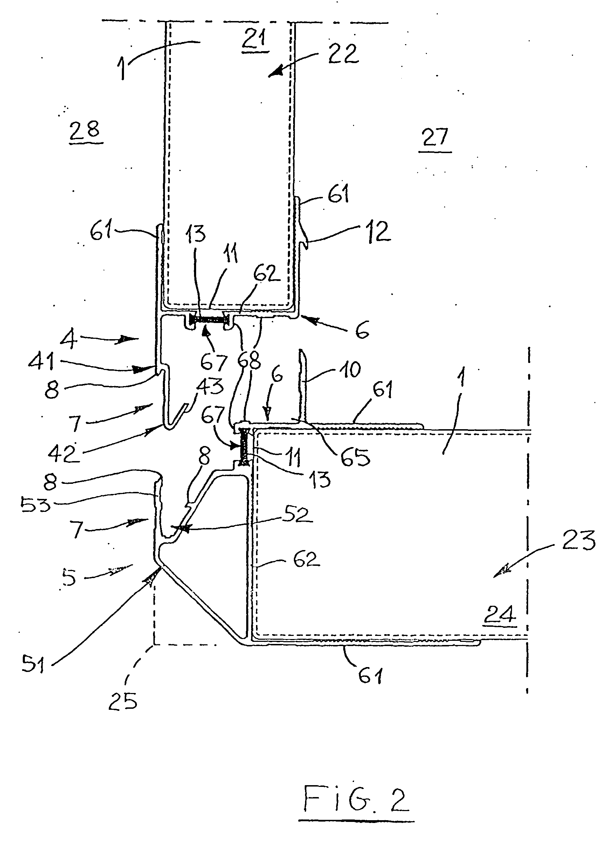

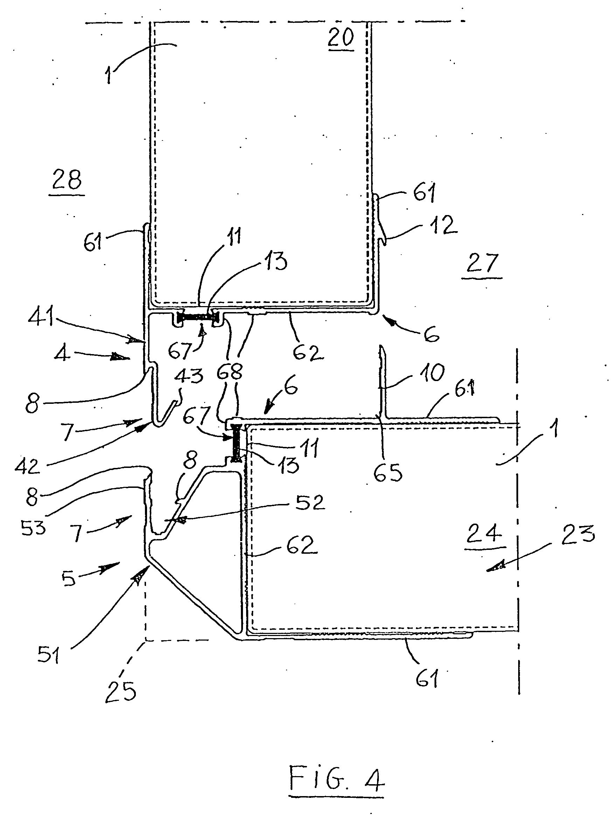

The set of elements also comprises joint sections 3 for joining together (normally at a right angle) the panels 1 at the edges 25 of the truck body 2 to be assembled (edges 25 ideally indicated by a dashed line in Figures 1 - 7 and 12).

Typically, each joint section 3, corresponding to one edge 25 of the truck body 2 to be assembled, is divided into two separate half-sections 4, 5, each corresponding to one of the two panels 1 to be joined together.

The cross-section of each half-section 4, 5 comprises at least one "U"-shaped portion 6 with preset depth, with side tabs 61 at a distance from one another corresponding to the thickness of one of the two panels 1 to be connected and defining a seat for the panel 1, which holds the entire outer edge 11 of the panel 1. In this way, once the panel 1 is assembled with the corresponding half-section 4, 5, all outer edge 11 irregularities and working and flatness tolerances are absorbed by the "U"-shaped portion 6. Therefore, it is also possible to guarantee parallelism between the opposite outer edges 11 belonging to the same panel 1 and fitted with half-sections 4, 5.

The outer edge 11 of a panel 1 and the relative half-section 4, 5 are thus stably connected to one another and a wall of the truck body 2 can be pre-assembled (front 20, or first or second side 21, 22, or ceiling 23 or floor 24), having sides which are perfectly regular and square with one another, consisting of the edge half-sections 4, 5, for connection to other, matching, walls (front 20, or first or second side 21, 22, or ceiling 23 or floor 24).

The walls complete with edge half-sections obtained in this way have precision dimension and can be handled individually and independently of one another.

Therefore, by fitting the panels 1 with the relative half-section 4, 5, the manufacturer of the set of elements can carry out precision pre-assembly of the walls of the truck body 2 (front 20, or first or second side 21, 22, or ceiling 23 or floor 24), so that the end user does not have to perform this, the most delicate and complex step in the assembly of the truck body, but at the same time maintaining the advantageous possibility of sending the truck body 2 to the end user still disassembled.

There are also means 7 for connecting the two half-sections 4, 5 to one another.

The walls, complete with edge half-sections, obtained by combining the panels 1 with relative half-sections 4, 5 as described above, can be connected to one another rapidly and simply during assembly of the truck body 2 by, for example, the end user. Assembly of the truck body 2 by the end user is, therefore, greatly facilitated, since it does not normally require large and complicated tools (such as templates, bridge cranes, etc.), since the walls can be pre-assembled by the manufacturer of the set of elements in an environment in which such tools are normally always present and easily used.

To further facilitate assembly of the truck body 2 by the end user, the means 7 for connecting the two half-sections 4, 5 to one another may be quick couplings, in some cases aided by an adhesive material to be dispensed on the spot (or suitable safety fasteners and/or riveting).

To fix the panels 1 to the "U"-shaped portions 6, in such a way as to fill any spaces and tolerances between the panel 1 and the relative half-section 4, 5, in addition to or instead of the rivets or similar items, it is possible to use an adhesive filler material, which makes the whole outer edge 11 and relative half-section 4, 5 into a single rigid block. The side of the side tabs 61 and the crosspiece 62 of the "U"-shaped portions 6 in contact with the panel 1 may, in such cases, have slight shaping (or rough areas) 63 to increase the hold of the adhesive material.

Advantageously, the "U"-shaped portion 6 of each half-section 4, 5 comprises, between its side tabs 61, at least one section 67 which is more elastic, allowing the side tabs 61 to be pulled apart temporarily and facilitating application of the half-section 4, 5 to its panel 1. This degree of freedom, which allows a temporary increase in the cross-section for entry into the seat formed by the "U"-shaped portion 6, facilitating panel 1 insertion, is very useful during pre-assembly of the truck body 2 walls before use by the end user and can be taken advantage of by simply levering the side tabs 61 with a suitable tool. Once the panel 1 is fixed to the half-section 4, 5, this degree of freedom is blocked and the assembly becomes rigid. The section 67 which is more elastic can be made in various ways, for example by reducing the local cross-section of the half-section 4, 5. Alternatively, the half-section 4, 5 may be divided into two portions (each comprising one of the side tabs 61), joined together by an elastic element which forms the section 67 which is more elastic and which may be made of metal or any other material suited to the purpose.

As is seen later, during the discussion of the problem of thermally insulating the truck body 2 even at the edges 25, the elastic element which forms the section 67 which is more elastic can advantageously be made of a heat insulating material which also functions as a thermal break.

In a preferred embodiment of the invention (illustrated, for example, in Figures 1 to 4), in each joint section 3 at least part of the two side tabs 61 of the "U"-shaped portion 6 of a half-section 4, 5 makes direct contact with at least part of the crosspiece 62 of the "U"-shaped portion 6 of the other half-section 4, 5, forming a substantially flat reciprocal contact surface 64. The panels 1 are at least partially overlapping at their sides adjacent to the relative edge 25. Moreover, in said embodiment, the two "U"-shaped portions 6 in contact with one another are preferably offset from one another towards the outside 28 of the truck body 2, in such a way as to recover space on the inside 27 of the truck body 2.

The reciprocal connecting means 7 substantially prevent at least relative translation by the two half-sections 4, 5 in a plane perpendicular to the edge 25.

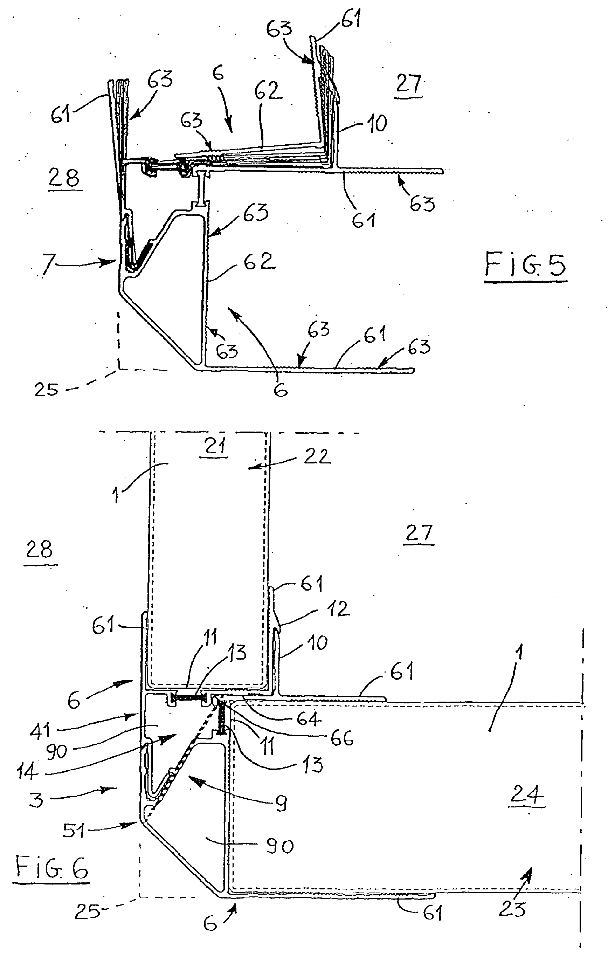

The reciprocal connecting means 7, together with the reciprocal contact surface 64, also prevent at least one direction of rotation of the panels 1 about an axis parallel with the relative edge 25. In particular, as illustrated in Figure 5, rotations about an axis parallel with the edge 25 are allowed when they tend to move the parts of the "U"-shaped portions 6 in contact at the reciprocal contact surface 64 away from one another. In contrast, rotations about an axis parallel with the edge 25 which tend to produce reciprocal penetration of said parts of the "U"-shaped portions 6 are not allowed. This type of behaviour can be obtained, for example, by placing the half-section 4, 5 reciprocal connecting means 7 on one side of the reciprocal contact surface 64.

In particular, advantageously, in a preferred embodiment of the invention illustrated in the accompanying drawings, the connecting means 7 prevent the direction of rotation of the panels 1 which tends to bring them closer to one another towards the inside 27 of the truck body 2. Since the two "U"-shaped portions 6 are preferably offset from one another towards the outside 28 of the truck body 2, in this case, the connecting means 7 are preferably located on the outside 28 of the truck body 2. Figure 5 illustrates the degree of freedom of rotation allowed in this case for the panels 1 when the joint section 3 is formed.

Until the truck body 2 is almost assembled, two panels 1, once the relative half-sections 4, 5 are connected, can at the most only translate along the shared outer edge 11, or turn slightly relative to one another in the direction opposite to that prevented by the connecting means 7 and the reciprocal contact surface 64. This allows any slight adjustments to the position of the panels during assembly.

However, when the truck body 2 is assembled, as well as preventing reciprocal panel 1 translation, the joint sections 3 act in conjunction with one another to prevent any deformation of the truck body 2 caused by rotation, thanks to the play of contrasting forces due to the connecting means 7 together with the respective reciprocal contact surfaces 64.

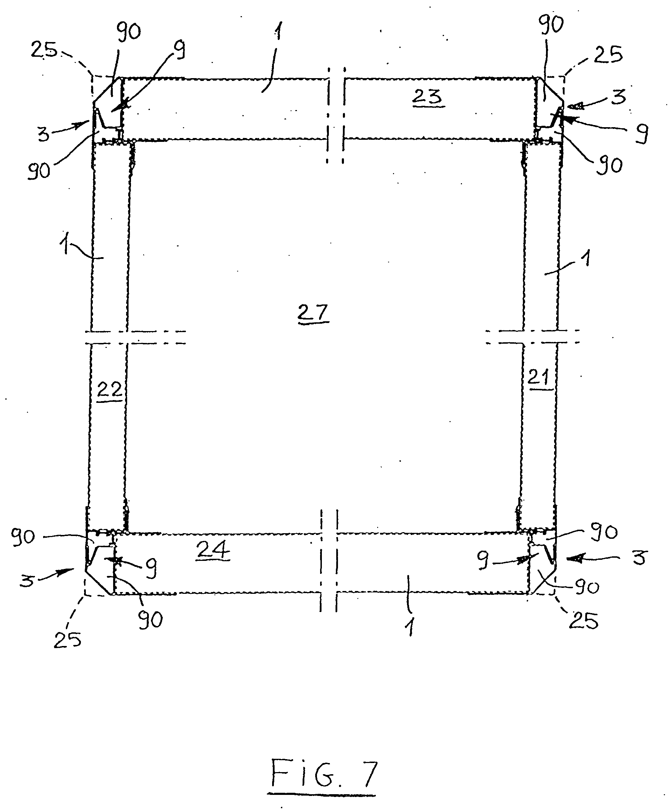

This is particularly evident in the analysis of the vertical cross-section of the truck body 2 illustrated in Figure 7. Since the panels 1 cannot translate relative to one another perpendicularly to the edges 25, each rotation about an edge 25 which tends to pull a pair of panels 1 apart produces a counter-reaction in the joint sections 3 corresponding to the two consecutive edges 25 which prevents deformation.

Moreover, as already indicated, the panels 1 are at least partially overlapping at their sides adjacent to an edge 25 relative to a joint section 3, with the "U"-shaped portions 6 in direct contact at the reciprocal contact surface 64. This allows the rotation and any deformation stresses exerted on the joint consisting of the joint section 3 to be discharged at least partially onto the panels 1. This is particularly useful in the frequent cases in which the truck body 2 consists of panels 1 which are very thick and heavy, as it relieves the joint sections 3 of the job of maintaining the structural strength of the completed product.

If the connecting means 7 are quick couplings, this mechanical structure can allow stiffening of the truck body 2 without the use of riveting and/or safety adhesives.

Advantageously, to help further stiffen the truck body 2 once formed, there may be geometric interference means 68 for the sliding of one "U"-shaped portion 6 on the other at the reciprocal contact surface 64. Said geometric interference means 68 may, for example, be integrated in the cross-section of each half-section 4, 5 at the "U"-shaped portion 6 in the form of substantially matching shapes or contact surfaces, as illustrated in Figures 1 to 4. This additional safety element may be particularly useful for supporting the connecting means 7, especially in the event of side thrusts and that is to say, above all, when the connecting means 7 are quick couplings.

Another advantage in terms of stability and strength is obtained if, in the joint sections 3 at the horizontal edges 25 of the truck body 2 to be assembled, the reciprocal contact surface 64 is substantially horizontal, to at least partially discharge the weight of one panel directly onto the other panel.

Appropriately, the cross-sections of the two half-sections 4, 5 respectively comprise corresponding appendices 41, 51 which can engage with one another for precision reciprocal right angle positioning of the panels. This greatly facilitates and allows absolute precision in the alignment and squaring of the panels 1 during assembly by the end user.

Advantageously, the reciprocal connecting means 7 of the two half-sections 4, 5 comprise at least the appendices 41, 51. In a particular, preferred embodiment of the invention, illustrated in the accompanying drawings, the appendix 41 of one of the two half-sections 4 has an end 42 which is at least partially subject to elastic deformation for snap-in insertion into a matching seat 52 made in the appendix 51 of the other half-section 5. There are reciprocal geometric interference means 8 between the end 42 and the matching seat 52, to prevent relative translation of the half-sections 4, 5 in the plane perpendicular to the relative edge 25. Thus, the connecting means 7 may substantially consist of the appendices 41, 51 and may become quick couplings.

Appropriately, the end 42 is "V"-shaped with one free tab 43 and the matching seat 52 is also "V"-shaped, with one free tab 53 on the opposite side to the other, making snap-in connection particularly simple and safe.

Once this snap-in connection has been made, the friction between the parts of the section which form the end 42 and the seat 52 (extending along the length of the joint section 3) makes the connection very stable, at most allowing the small longitudinal adjustments and small rotations indicated earlier. A structural adhesive may be applied between the end 42 and the matching seat 52, to make the joint definitive.

In some cases, given the inevitable size tolerances along the entire joint profile 3, the contact between the two half-sections 4, 5 is so strong that, due to their friction along the length of the joint, the panels 1 can no longer slide relative to one another. In this case, any adhesive present, if not yet hard, may act as a lubricant and allow adjustments.

As illustrated in the accompanying drawings, advantageously, when the two half-sections 4, 5 are connected to form the joint section 3, the appendices 41, 51, together with at least part of the "U"-shaped portions 6, form a longitudinal tubular element 9.

The outer wall of the longitudinal tubular element 9 obviously has a break at the reciprocal contact surface 64, allowing the above-mentioned rotation about an axis parallel with the edge 25 (a rotation which moves the parts of the "U"-shaped portion 6 in contact with the reciprocal contact surface 64 illustrated in Figure 5 away from one another).

In the preferred embodiment of the invention illustrated in the accompanying drawings, the longitudinal tubular element 9 is outside the tubular body 2.

Since the two "U"-shaped portions 6 are preferably offset relative to one another towards the outside 28 of the truck body 2, the connecting means 7 (comprising the appendices 41, 51 and in some cases consisting of these) are located on the outside 28 of the truck body so that, together with the reciprocal contact surface 64, they prevent the direction of rotation of the panels 1 which tends to move them closer to one another towards the inside 27 of the truck body 2.

The box-shaped configuration thus conferred on the joint section 3 provides the assembled truck body 2 with particular strength and stiffness. Appropriately, the longitudinal tubular element 9 (which, as illustrated in the accompanying drawings, preferably has a substantially trapezoidal cross-section) consists of at least two adjacent longitudinal tubular sub-elements 90, whose separating wall 91 acts as a stiffening post.

This is particularly advantageous in the embodiment illustrated in Figures 1, 3 and 6, in which the cross-sections of the two longitudinal tubular sub-elements 90 are substantially triangular and juxtaposed (as shown by the dashed line in Figure 6), since it gives the joint structure special strength and stiffness, particularly once the truck body 2 is assembled. This geometric configuration is particularly simple to obtain when the end 42 and the matching seat 52 are "V"-shaped, as in a preferred embodiment of the invention illustrated in the afore-mentioned accompanying drawings. In this case, the separating wall 91, which acts as a stiffening post, is formed, in particular, by the combination of the free tab 43 of the end 42 and the structure of the matching seat 52, the end 42 and the free tab 53 of the matching seat 52 forming at least part of the outer wall of the tubular element 9.

To further facilitate rapid, safe, precision assembly of the truck body 2, the cross-section of at least one of the two half-sections 4, 5 comprises, at its "U"-shaped portion 6, at least one connecting tab 10 which is substantially perpendicular to the reciprocal contact surface 64 and, with the latter, forms an angle 65 for contact with the "U"-shaped portion 6 of the other half-section.

In this way, the relative positions (alignment and squaring) of the two half-sections 4, 5 during assembly are made even more certain and precise.

Appropriately, in a preferred embodiment illustrated in the accompanying drawings, the contact tab 10 is on a side of the joint section 3 facing the inside 27 of the truck body 2 to be assembled.

When the two "U"-shaped portions 6 are offset relative to one another towards the outside 28 of the truck body 2 and the connecting means 7 (comprising the appendices 41, 51 and sometimes consisting of these) are located on the outside 28 of the truck body (and may thus form, together with the structure of the half-sections 4, 5, the longitudinal tubular element 9 previously illustrated), the contact tab 10 thus positioned acts in conjunction with the connecting means 7 and with the reciprocal contact surface 64 to prevent the direction of rotation of the panels 1 which tends to move them towards one another towards the inside 27 of the truck body 2.

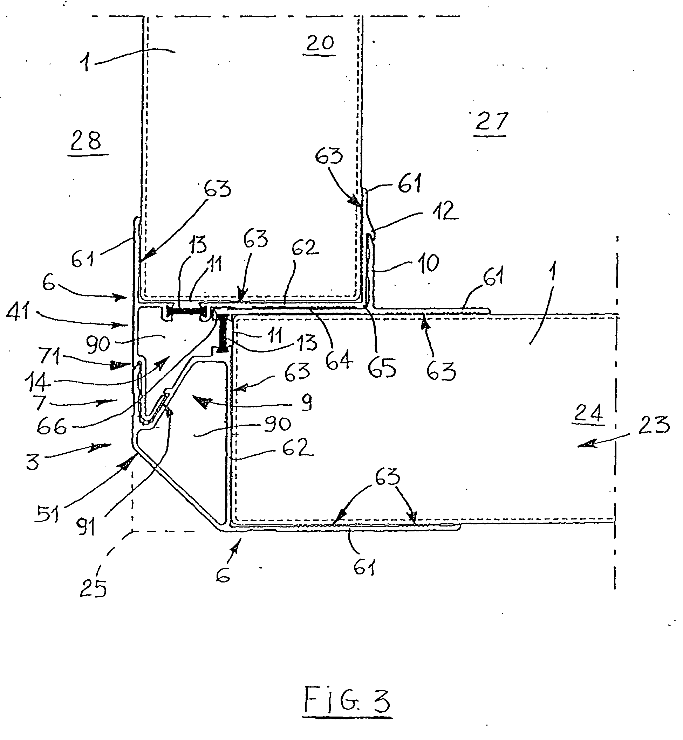

Advantageously, the cross-section of the other half-section (that is to say, the half-section matching that on which the contact tab 10 is made) comprises at least one connecting element 12 for a free end of the contact tab 10, to make contact against the tab 10 certain and prevent translations perpendicular to the plane on which it lies. Moreover, particularly when it is on the floor 24 of the truck body 2 on the inside and is vertical, the contact tab 10, together with the connecting element 12 (which may have a sloping structure, as illustrated in the accompanying drawings), also assumes the function of a seal for any liquids which may be present in the truck body 2. As is clearly illustrated in the accompanying drawings, in addition to the barrier function exercised directly by the contact tab 10, the path which any liquids may follow to enter the longitudinal tubular element 9 or to leave it is particularly tortuous. Moreover, if, even at the part of the connecting means 7 facing the outside, there are sloping connections 71, as illustrated in Figures 1 and 3, liquids from the outside face an equally tortuous route if they are to enter the joint section 3. This prevents the stagnation of organic material inside the joint section 3, reducing contamination risks.

Therefore, in this particular embodiment of the invention, once the truck body 2 is assembled, the presence of a sealer at the joint between the panels 1 inside the truck body 2 is optional. Obviously, the presence of a sealer (which may be the same structural adhesive as is used to join the two half-sections 4, 5) is an added guarantee, but the structure of the joint facilitates the function.

Appropriately, to guarantee heat insulation not only at the walls (front 20, first and second side 21, 22, ceiling 23, floor 24) or the door 26 of the truck body 2, but also at the edges 25, when the half-sections 4, 5 are connected together by the reciprocal connecting means 7, any path from the outside 28 to the inside 27 of the truck body 2 though the joint section 3 encounters one cavity or one section of heat insulating material. In this way, heat cannot be transferred from the outside 28 to the inside 27 of the truck body (or vice versa) by conduction through materials with a high level of heat conductivity (which may be present in the joint section 3, for example, aluminium and/or steel).

This condition is clearly satisfied if both of the matching half-sections 4, 5 are made of heat insulating material, for example a structural plastic, such as polyvinyl chloride (PVC), or other plastic material which may be strengthened with fibreglass. The use of these materials is facilitated, in the presence of thick and heavy heat insulating panels 1, by the fact, already indicated, that the special shape of the matching half-sections 4, 5 allows rotation, deformation stresses and panel 1 weight to be discharged not only onto the joint section 3, but also, to a good degree, onto the panels 1 themselves.

In a preferred embodiment of the invention, each of the "U"-shaped portions 6 of the cross-section of the half-sections 4, 5 relative to a joint section 3 is metal (for example, an aluminium alloy) and is interrupted, from the outside 28 to the inside 27 of the truck body 2, by at least one thermal break element 13. The reciprocal connecting means 7 between the half-sections 4, 5, together with the half-sections 4, 5, form at least one closed cavity 14, between the outside 28 and the inside 27 of the truck body 2. The thermal break elements 13 form at least one section of the edge of the closed cavity 14. The thermal break elements 13, therefore, constitute a section of the "U"-shaped portions 6 and, at the same time, form at least one section of the edge of the closed cavity 14, part of the edge being substantially formed by one of the two half-sections 4, 5, whilst the remaining part is substantially formed by the other. Moreover, since the closed cavity 14 is between the outside 28 and the inside 27 of the truck body 2, it is not possible to pass from the outside 28 to the inside 27 through the joint section 3 without crossing it, or without crossing at least one of the two thermal break elements 13. All of the branches of the cross-section of each of the two half-sections 4, 5 facing the outside 28 are on one side of the thermal break element 13, whilst all of the branches of the cross-section of each half-section 4, 5 facing the inside 27 are on the other side. Therefore, movement from the outside 28 to the inside 27 along the section of a half-section 4, 5 is not possible without encountering the thermal break element 13.

Advantageously, the thermal break element 13 is located between the side tabs 61 of each "U"-shaped portion 6 and is at least partially subject to elastic deformation, to allow the side tabs 61 to be pulled apart temporarily and facilitate application of the relative half-section 4, 5 to the panel 1. Therefore, as already indicated, the thermal break element 13 coincides with the section which is more elastic 67 of the "U"-shaped portion 6 and has the same function, in addition to its thermal function. Therefore, all of the considerations with reference to the more elastic section 67 also apply to the thermal break element.

The solution to the thermal problem described, which involves the interruption of the "U"-shaped portions 6 by thermal break elements 13 is particularly advantageous when the "U"-shaped portions 6 are in direct contact with one another at the reciprocal contact surface 64 and, in particular, in the preferred embodiment of the invention already described, in which the two "U"-shaped portions 6 are offset from one another towards the outside 28 of the truck body 2 and, outside the truck body 2 and in combination with the appendices 41, 51, form the longitudinal tubular element 9, in turn divided into two adjacent longitudinal tubular elements 90. In this case, as illustrated in the accompanying drawings, since the longitudinal tubular element 9 is outside the truck body 2, again each of the "U"-shaped portions 6 of the cross-section of the half-sections 4, 5 relative to a joint profile 3 is metal and is interrupted, from the outside 28 to the inside 27 of the truck body 2, by at least one thermal break element 13. The edge of one of the two adjacent tubular sub-elements 90 holds an external side 66 of the reciprocal contact surface 64 and forms the closed cavity 14, between the outside 28 and the inside 27 of the truck body 2. The thermal break elements 13 form at least one section of the edge of the closed cavity 14.

The joint obtained in this way is particularly compact. The substantially trapezoidal structure of the longitudinal tubular element 9 closes the break formed by overlapping the offset "U"-shaped portions 6. The thermal break elements 13 may be positioned, each on the relative half-section 4, 5, close to the position of the external side 66 of the reciprocal contact surface 64.

This reduces to a minimum the ratio of the overall surface of the truck body 2 to the join zones between the panels 1.

Appropriately, the panels 1 may have a structure with a high level of heat inertia.

This characteristic, in combination with the above-mentioned joint structure providing heat insulation, allows the assembly of an extremely efficient isothermal truck body 2, which is not only heat insulated, but also tends to maintain the difference in temperature between the inside 27 and the outside 28 for lengthy periods thanks, on the one hand, to the heat inertia of the walls and, on the other, the relatively low incidence of the joint zone (normally with low heat inertia) on the overall surface of the entire truck body 2.

This extends the length of the intervals between two successive activations of the refrigeration unit (or heating system) needed to maintain, within the truck body 2, a temperature within the limits set (for example, on a thermostat) and, therefore, is an obvious advantage in terms of savings. In the event of a fault in the refrigeration unit (or heating system), this characteristic allows more time for action to be taken before the goods are definitively spoiled.

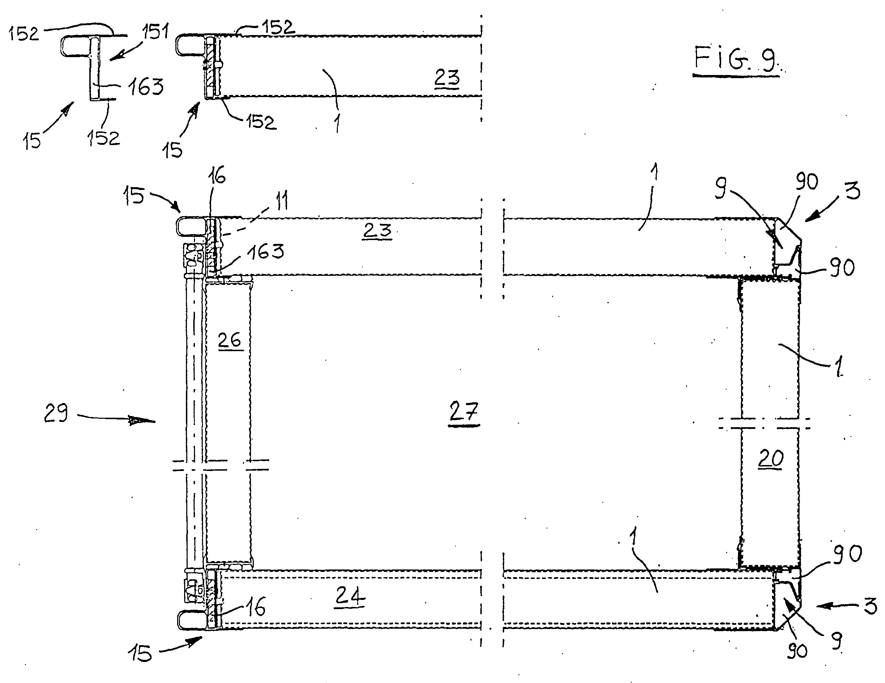

As illustrated in Figures 7 to 9, the first and second sides 21, 22, the ceiling 23 and the floor 24 have half-sections 4, 5 at least on their side facing the front 20 and on the two sides consecutive to the latter. The front 20 has matching half-sections 4, 5 on all four sides.

In an embodiment which is not illustrated in the accompanying drawings, the first and second sides 21, 22, the ceiling 23 and floor 24 also have half-sections 4, 5 on the side facing the rear door 26, for connection to a rear frame bearing matching sections on the face which is facing the truck body 2 and couplings for the rear door 26 on the opposite face. However, since the rear door 26 is normally mounted last, the truck body 2 structure is already very rigid when the rear frame is fitted.

Given that any fitting tolerances (which are small, given the precision of the system in accordance with the present invention) accumulate at the rear frame coupling zone, it may be difficult to insert the rear frame.

Alternatively, as illustrated in Figures 7 to 9, to allow improved management of any fitting tolerances at the moment of assembling the rear door 26, on the side facing the rear door 26 the first and second side 21, 22, the ceiling 23 and floor 24 preferably have finishing sections 15 bearing couplings for the rear door 26.

As illustrated in Figures 7 to 10, the cross-section of the finishing sections 15 comprises at least a "U"-shaped part 151 of preset depth, with side tabs 152 at a distance from one another which corresponds to the thickness of the panel 1 and forming a seat for the panel 1, which holds at least the entire outer edge 11, absorbing all of its irregularities and the working and flatness tolerances to guarantee parallelism with the opposite outer edge 11 belonging to the same panel 1 and bearing a half-section 4, 5.

Again, the finishing sections 15 can be pre-assembled with the corresponding panels 1 directly by the manufacturer of the set of elements, so that the end user can directly handle a wall complete with all of the required sections.

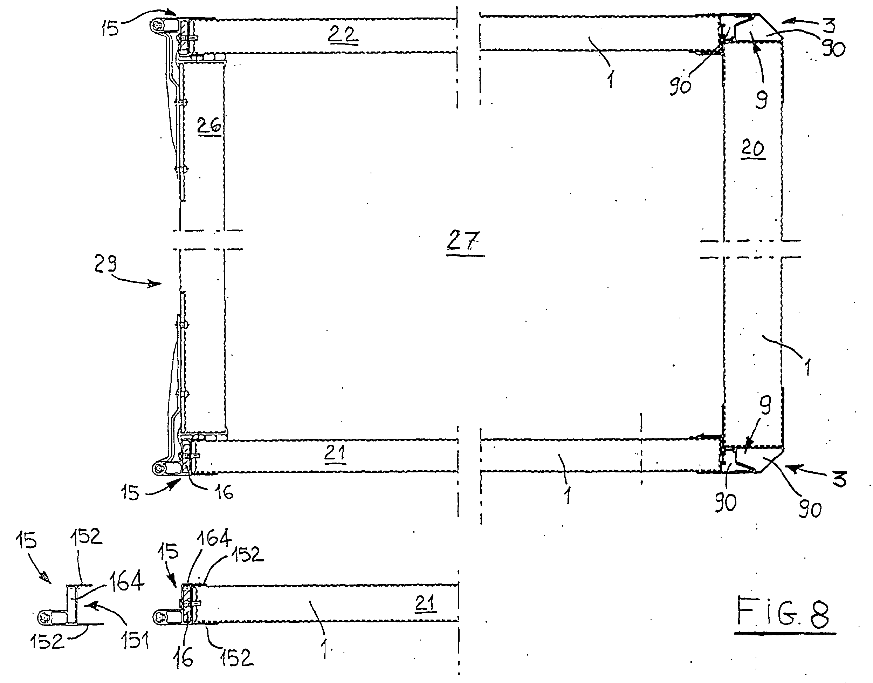

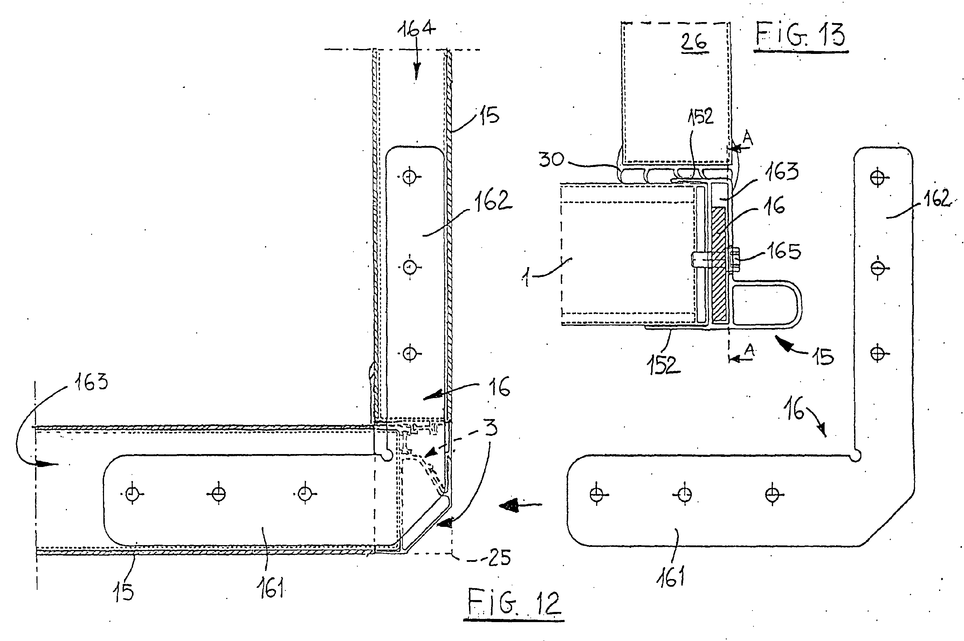

To allow stiffening of the truck body 2 structure at the rear door 26, forming a rear frame which, at the same time, allows recovery of all of the fitting tolerances accumulated, the set of elements disclosed advantageously comprises "L"-shaped strengthening and stiffening brackets 16 for the rear part 29 of the truck body 2, with a first side 161 which can be inserted in a first seat 163 specially made in the finishing section 15 of a horizontal panel 1 and a second side 162 which can be inserted in a second seat 164 specially made in the finishing section 15 of a vertical panel 1, as well as means 165 for fixing the "L"-shaped brackets 16 to the panels 1. The fixing means 165 may, obviously, be rivets and/or screws attached to suitable metal inserts inside the panels 1. This embodiment is illustrated in Figures 8 to 13, and in particular in Figures 12 and 13, the left-hand part of Figure 12 being a cross-section at the join between a vertical panel 1 and a horizontal panel according to the plane labelled A - A in Figure 13. The right-hand part of Figure 12 illustrates an "L"-shaped bracket 16.

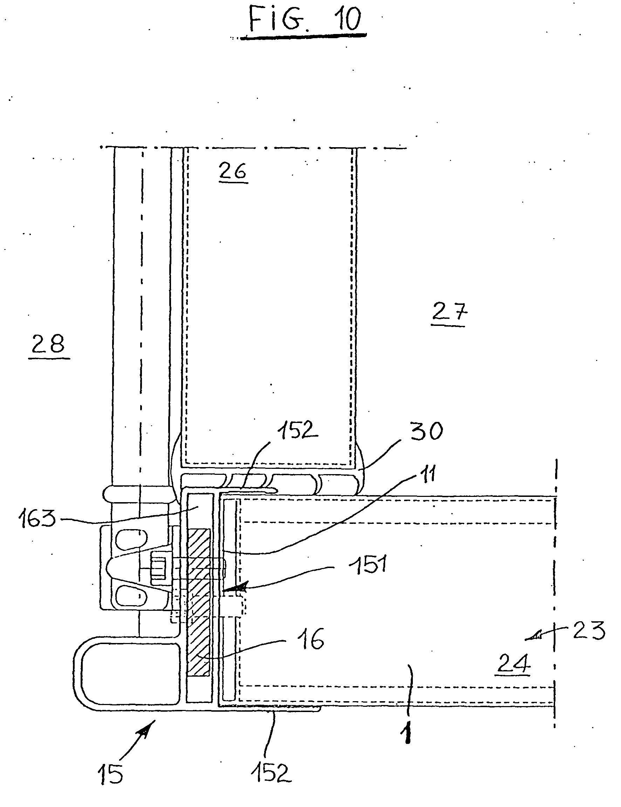

Appropriately, to guarantee heat insulation at the rear door 26, as illustrated in particular in Figure 10, the outer edge of the rear door 26 is covered by a heat insulating seal 30, which makes contact with the "U"-shaped part 151 of the finishing sections 15 as far as the inside of the truck body 2 at least past the side tab 152 and touching the panel 1 directly, providing heat insulation for the inside 27 of the truck body 2 from the outside 28 when the rear door 26 is closed.

Appropriately, to facilitate end-trimming of the half-sections 4, 5 at the corners of the truck body 2 and as illustrated in the accompanying drawings, the first side 21 has half-sections 4, 5 which are the same as one another and the same as the half-sections 4, 5 of the second side 22, whilst the ceiling 23 and floor 24 have half-sections 4, 5 which are the same as one another and complement those of the first and second sides 21, 22.

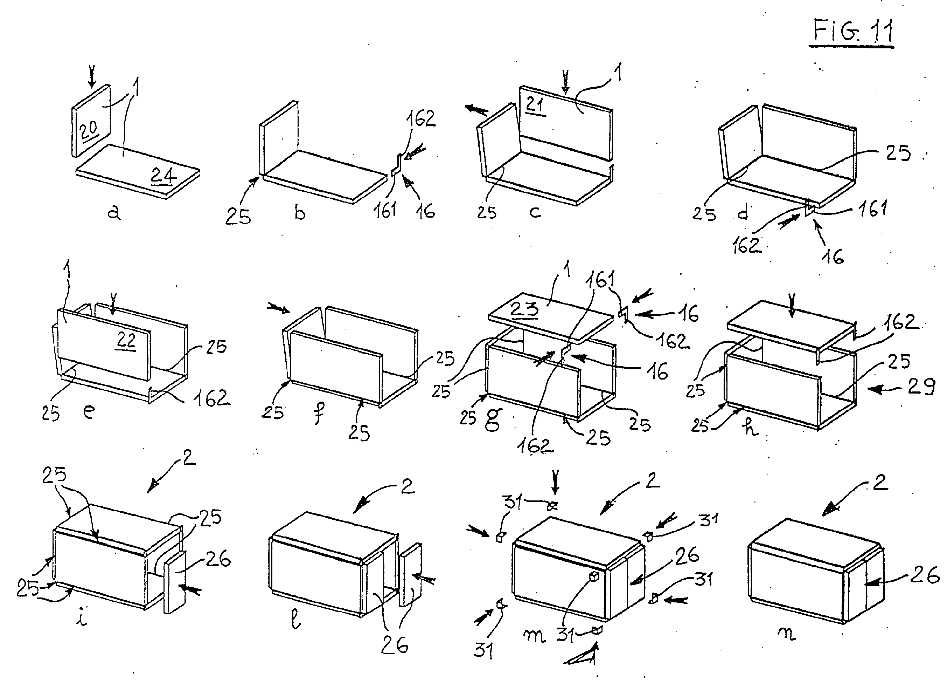

Figure 11 illustrates a truck body 2 assembly sequence using the set of elements which forms the subject matter of the present invention. The end user receives the front 20, first and second sides 21, 22, ceiling 23 and floor 24 ready-assembled and complete with the half-sections 4, 5 and finishing sections 15. After fixing the floor 24 to a suitable support (for example, the tractor of a truck - trailer unit), it is joined to the front 20 using the alignment and squaring means, as well as the connecting means 7 included in the matching half-sections 4, 5 of the two panels (Figure 11a), after distribution of a structural adhesive for safe fastening, if necessary. After taking advantage of the possibility of translating the front 20 along the edge 25 to align it with the floor 24, two "L"-shaped brackets are inserted, with their first sides 161 in the first seats 163 of the finishing sections 15 belonging to the floor 24 (Figures 11b and 11d). The second sides 162 can, therefore, be used together with the half-section 4, 5 alignment and squaring means as references for correct positioning of the first and second sides 21, 22. During assembly of the latter, it is possible to make use of the degree of freedom of rotation allowed by the joint between the front 20 and the floor 24 and move the front 20 away slightly, allowing connection of the first and second sides 21, 22 to the floor 24 (Figures 11c, 11e), with the aid of a structural adhesive if necessary, inserting the second side 162 of the brackets 16 in the second seats 164 in the finishing sections 15 of the first and second sides 21, 22. At this point (Figure 11f), the front 20 is also attached to the first and second sides 21, 22, allowing rotation in the opposite direction and returning the "U"-shaped portions 6 of the front 20 and floor 24 into contact with one another at the reciprocal contact surface 64. Two more "L"-shaped brackets are inserted with their first sides 161 in the first seats 163 of the finishing section 15 of the ceiling 23 (Figure 11g) and their second sides 162 are used (together with the alignments and squaring of all of the half-sections 4, 5 of the various panels 1) as references for positioning the ceiling 23 of the truck body 2 (Figure 11h). After fixing the brackets 16, the wings of the rear door 26 are applied (Figures 11 and 11*l*), as well as any finishing corner-pieces 31 for the truck body 2, producing the complete truck body 2 (Figure 1 In).

Unless extremely large, the walls (front 20, or first and second sides 21, 22, or ceiling 23 or floor 24) are easily handled and positioned manually with suction cups. For example, for walls which are up to 7 metres in length, two persons can carry out the operation.

The present invention has important advantages.

The end user can be supplied with the disassembled body, but with the walls ready-assembled and fitted with the edge half-sections which are simple to connect without any need for complicated tools. The edge half-sections include quick coupling means and alignment and squaring means which facilitate assembly and make it extremely rapid. Secondly, the edge half-sections form joint sections in which, until assembly of the truck body is almost complete, there may still be small degrees of freedom which allow adjustments to the position, although the assembled truck body is absolutely stable and rigid (even without the aid of safety fastenings such as rivets or adhesives). Another important advantage is the simple creation of heat insulating joint sections, by combining two separate edge half-sections. An equally important advantage is the fact that the sections may be substantially relieved of supporting functions and intended, instead, to provide a connection between the walls which is safe (not subject to excessive supporting stresses), precise (once connected they form an outer edge which is perfectly flat and guarantees that panels rest on one another in a precision fashion) and perfectly squared. The section regularises the surfaces of the panels at the outer edges, making them perfectly flat and regular, so that resting the sections on one another guarantees that they lie in a regular and calibrated fashion along the entire length of the panel.

The described embodiments can be subject to modification without departing from the scope of the invention as defined in the claims.

## Claims

1. A set of elements for the rapid assembly of vehicle truck bodies, of the type comprising:
- panels (1), substantially rectangular and with rough outer edges (11), the panels (1) being designed to form a front (20), a first and a second side (21, 22), a ceiling (23) and a floor (24) of a truck body (2) to be assembled;
- joint sections (3) for joining together the panels (1) at the edges (25) of the truckbody (2) to be assembled;
- at least one rear door (26) for the truck body (2) to be assembled;
- each joint section (3), at an edge (25) of the truck body (2) to be assembled, is divided into two separate half-sections (4, 5), each corresponding to one of the two panels (1) to be joined;
- the cross-section of each half-section (4, 5) comprises at least one "U"-shaped portion (6) of preset depth, with side tabs (61) set at a distance from one another corresponding to the thickness of one of the two panels (1) to be connected and forming a seat for the panel (1), holding the entire outer edge (11) of the panel (1) and absorbing all of its irregularities and working and flatness tolerances, guaranteeing parallelism between the opposite outer edges (11) belonging to the same panel (1) and fitted with half-sections (4, 5);
- there being means (7) for connecting the two half-sections (4, 5);
to create walls complete with edge half-sections, with precision dimensions,which can be handled individually and independently and connected to one another rapidly and simply during truck body (2) assembly
**characterised in that**
- each of the "U"-shaped portions (6) of the cross-section of the half-sections (4, 5) relative to a joint section (3) is interrupted, from the outside (28) to the inside (27) of the truck body (2), by at least one thermal break element (13) and said panels, said rear door are heat insulating.

2. The set of elements according to claim 1, **characterised in that** in each joint section (3):
- at least part of one of the two side tabs (61) of the "U"-shaped portion (6) of a half-section (4, 5) makes direct contact with at least part of the crosspiece (62) of the "U"-shaped portion (6) of the other half-section (4, 5), forming a substantially flat reciprocal contact surface (64), the panels (1) at least partially overlapping at their sides adjacent to the relative edge (25);
- the reciprocal connecting means (7) substantially prevent at least relative translations of the two half-sections (4, 5) in a plane perpendicular to the edge (25) and, together with the reciprocal contact surface (64) prevent at least one direction of rotation of the panels (1) about an axis parallel with the relative edge (25).

3. The set of elements according to claim 2, **characterised in that** it comprises geometric interference means (68) for the sliding of one "U"-shaped portion (6) over the other at the reciprocal contact surface (64).

4. The set of elements according to claim 2 or 3, **characterised in that**, in the joint sections (3) at the horizontal edges (25) of the truck body (2) to be assembled, the reciprocal contact surface (64) is substantially horizontal, to at least partially discharge the weight of one panel directly onto the other panel.

5. The set of elements according to any of the claims from 2 to 4,
**characterised in that** rotation of the panels (1) tending to bring them towards one another is prevented.

6. The set of elements according to any of the claims from 2 to 5, **characterised in that** the cross-sections of the two half-sections (4, 5) respectively comprise appendices (41, 51) which engage with one another for precision reciprocal right angle panel positioning.

7. The set of elements according to claim 5, **characterised in that** the connecting means (7) which connect the two half-sections (4, 5) to one another comprise at least the appendices (41, 51).

8. The set of elements according to claim 7, **characterised in that** the appendix (41) of one of the two half-sections (4) has an end (42) which is at least partially subject to elastic deformation for snap-in insertion in a matching seat (52) made in the appendix (51) in the other half-section (5), there being reciprocal geometric interference means (8) between the end (42) and the matching seat (52), to prevent relative translations of the half-sections (4, 5) in the plane perpendicular to the relative edge (25).

9. The set of elements according to claim 8, **characterised in that** the end (42) is "V"-shaped with a free tab (43) and the matching seat (52) is "V"-shaped with a free tab (53) on the side opposite the other.

10. The set of elements according to any of the claims from 6 to 9,
**characterised in that**, when the two half-sections (4, 5) are connected to form the joint section (3), the appendices (41, 51), together with at least part of the "U"-shaped portions (6), form a longitudinal tubular element (9).

11. The set of elements according to claim 10, **characterised in that** the longitudinal tubular element is outside the truck body (2).

12. The set of elements according to claim 10 or 11, **characterised in that** the longitudinal tubular element (9) consists of at least two adjacent longitudinal tubular sub-elements (90), whose separating wall (91) acts as a stiffening post.

13. The set of elements according to any of the claims from 2 to 12, **characterised in that**, at its "U"-shaped portion (6), the cross-section of at least one of the two half-sections (4, 5) comprises at least one contact tab (10) which is substantially perpendicular to the reciprocal contact surface (64), combining with the latter to form an angle (65) for contact with the "U"-shaped section (6) of the other half-section.

14. The set of elements according to claim 13, **characterised in that** the contact tab (10) is on one side of the joint section (3) facing the inside (27) of the truck body (2) to be assembled.

15. The set of elements according to claim 13 or 14, **characterised in that** the cross-section of the other half-section comprises at least one connecting element (12) for a free end of the contact tab (10).

16. The set of elements according to any of the foregoing claims, **characterised in that**, when the half-sections (4, 5) are connected together by the reciprocal connecting means (7), any path from the outside (28) to the inside (27) of the truck body (2) through the joint section (3) encounters at least one cavity or section of heat insulating material.

17. The set of elements according to claim 16, **characterised in that** the means (7) for reciprocal connection of the half-sections (4, 5), together with the half-sections (4, 5), forms at least one closed cavity (14), between the outside (28) and the inside (27) of the truck body (2) and, the thermal break elements (13) form at least one section of the edge of the closed cavity (14).

18. The set of elements according to claim 12, **characterised in that**:
- the longitudinal tubular element (9) is outside the truck body (2);
- each of the "U"-shaped portions (6) of the cross-section of the half-sections (4, 5) of a joint section (3) is metal and is interrupted, from the outside (28) to the inside (27) of the truck body (2) by at least one thermal break element (13);
- the edge of one of the two adjacent tubular sub-elements (90) contains an external side (66) of the reciprocal contact surface (64) and forms a closed cavity (14), being between the outside (28) and the inside (27) of the truck body (2), the thermal break elements (13) forming at least one section of the edge of the closed cavity (14).

19. The set of elements according to claim 17 or 18, **characterised in that** the thermal break element (13) is located between the side tabs (61) of each "U"-shaped portion (6) and is at least partially subject to elastic deformation, allowing the side tabs (61) to be pulled apart temporarily and facilitating application of the half-section (4, 5) to the panel (1).

20. The set of elements according to any of the foregoing claims from 1 to 16, **characterised in that**, between its side tabs (61), the "U"-shaped portion (6) of each half-section (4, 5) comprises at least one section which is more elastic (67), allowing the side tabs (61) to be pulled apart temporarily and facilitating application of the half-section (4, 5) to the panel (1).

21. The set of elements according to any of the foregoing claims, **characterised in that** the first and second sides (21, 22), the ceiling (23) and the floor (24) have half-sections (4, 5) at least on their sides facing the front (20) and on the two sides consecutive to this, the front (30) having matching half-sections (4, 5) on all four sides.

22. The set of elements according to claim 21, **characterised in that** the first and second sides (21, 22), the ceiling (23) and the floor (24) also have half-sections (4, 5) on the side facing the rear door (26), for connection to a rear frame bearing matching sections on the face facing the truck body (2) and couplings for the rear door (26) on the opposite face.

23. The set of elements according to claim 21, **characterised in that**, on the side facing the rear door (26), the first and second sides (21, 22), the ceiling (23) and the floor (24) have finishing sections (15) bearing couplings for the rear door (26).

24. The set of elements according to claim 23, **characterised in that** the cross-section of the finishing sections (15) comprises at least one "U"-shaped part (151) of preset depth, having side tabs (152) at a distance from one another corresponding to the thickness of the panel (1) and forming a seat for the panel (1), holding at least the entire outer edge (11), absorbing all of its irregularities and working and flatness tolerances, guaranteeing parallelism with the opposite outer edge (11) belonging to the same panel (1) and bearing a half-section (4, 5).

25. The set of elements according to claim 24, **characterised in that** the outer edge of the rear door (26) is covered by a heat insulating seal (30) which makes contact with the "U"-shaped part (151) of the finishing sections (15) as far as the inside of the truck body (2) at least past the side tab (152) and touching the panel (1) directly, providing heat insulation for the inside of the truck body (2) from the outside when the rear door (26) is closed.

26. The set of elements according to any of the claims from 23 to 25, **characterised in that** it comprises "L"-shaped strengthening and stiffening brackets (16) for the rear part (29) of the truck body (2), having a first side (161) which can be inserted in a first seat (163) in the finishing section (15) of a horizontal panel (1) and a second side (162) which can be inserted in a second seat (164) in the finishing section (15) of a vertical panel (1), as well as means (165) for fixing the "L"-shaped brackets (16) to the panels (1).

27. The set of elements according to any of the claims from 21 to 27, **characterised in that** the first side (21) has half-sections (4, 5) which are the same as one another and the same as the half-sections (4, 5) of the second side (22), whilst the ceiling (23) and floor (24) have half-sections (4, 5) which are the same as one another and complement those of the first and second sides (21, 22).

28. The set of elements according to any of the claims from 2 to 27, **characterised in that** the panels (1) have a structure with a high level of heat inertia.

29. A truck body (2) for vehicles, **characterised in that** it is made by assembling a set of elements in accordance with any of the foregoing claims.

## Patentansprüche

1. Bausatz für den schnellen Zusammenbau von Kraftfahrzeugkästen, enthaltend:
- Paneele (1), im wesentlichen rechteckig und mit rohen äusseren Kanten (11), wobei die Paneele (1) dazu bestimmt sind, eine Vorderwand (20), eine erste und eine zweite Seitenwand (21, 22), ein Dach (23) und einen Boden (24) eines zusammenzusetzenden Kraftfahrzeugkastens (2) zu bilden;
- Verbindungsprofile (3) zum Verbinden der Paneele (1) miteinander an den Ecken (25) des zusammenzusetzenden Kraftfahrzeugkastens (2);
- wenigstens eine hintere Tür (26) für den zusammenzusetzenden Kraftfahrzeugkasten (2);
- wobei jedes Verbindungsprofil (3) an einer Ecke (25) des zusammenzusetzenden Kraftfahrzeugkastens (2) in zwei getrennte Halbprofile (4, 5) geteilt ist, jedes entsprechend einem der beiden zu verbindenden Paneele (1);
- wobei der Querschnitt eines jeden Halbprofils (4, 5) wenigstens einen "U"-förmigen Abschnitt (6) von vorgegebener Tiefe enthält, mit Seitenflügeln (61), die in einem Abstand voneinander angeordnet sind, welcher der Dicke von einem der beiden miteinander zu verbindenden Paneele (1) entspricht, und die einen Sitz für das Paneel (1) bilden, welcher die gesamte äussere Kante (11) des Paneels (1) hält und alle Unregelmässigkeiten, Arbeits- und Ebenheitstoleranzen auffängt, wodurch der Parallelismus zwischen den sich gegenüberliegenden, zu demselben Paneel (1) gehörenden und mit Halbprofilen (4, 5) versehenen äusseren Kanten (11) gewährleistet ist;
- wobei Mittel (7) zum Verbinden d er b eiden Halbprofile (4, 5) vorhanden sind;
um Wände komplett mit Eck-Halbprofilen und von präzisen Abmessungen herzustellen, welche individuell und unabhängig voneinander gehandhabt und schnell und einfach während d es Zusammenbaus d es Kraftfahrzeugkastens (2) miteinander verbunden werden können;
**dadurch gekennzeichnet, dass**
- jeder der "U"-förmigen Abschnitte (6) in dem Querschnitt der ein Verbindungsprofil (3) betreffenden Halbprofile (4, 5) von der Aussenseite (28) zur Innenseite (27) des Kraftfahrzeugkastens (2) durch wenigstens ein thermisches Zwischenelement (13) unterbrochen ist, und dass die genannten Paneele und die genannte hintere Tür wärmeisolierend sind.

2. Bausatz nach Patentanspruch 1, **dadurch gekennzeichnet, dass** in jedem Verbindungsprofil (3):
- wenigstens ein Teil von einem der beiden Seitenflügel (61) des "U"-förmigen Abschnittes (6) eines Halbprofils (4, 5) direkten Kontakt mit wenigstens einem Teil des Querstückes (62) des "U"-förmigen Abschnittes (6) des anderen Halbprofils (4, 5) hat, wobei eine im wesentlichen ebene gegenseitige Kontaktfläche (64) gebildet wird, und wobei die Paneele (1) an ihren an die jeweilige Ecke (25) angrenzenden Seiten wenigstens teilweise überlagert sind;
- die gegenseitigen Verbindungsmittel (7) im wesentlichen wenigstens entsprechende Verschiebungen der beiden Halbprofile (4, 5) in einer Ebene lotrecht zu der Ecke (25) verhindern, und sie zusammen mit der gegenseitigen Kontaktfläche (64) auch wenigstens eine Drehrichtung der Paneele (1) um eine Achse parallel zu der entsprechenden Ecke (25) verhindern.

3. Bausatz nach Patentanspruch 2, **dadurch gekennzeichnet, dass** er geometrische Interferenzmittel (68) zum Gleiten von einem "U"-förmigen Abschnitt (6) über dem anderen an der gegenseitigen Kontaktfläche (64) enthält.

4. Bausatz nach Patentanspruch 2 oder 3, **dadurch gekennzeichnet, dass** in den Verbindungsprofilen (3) an den horizontalen Ecken (25) des zusammenzusetzenden Fahrzeugskastens (2) die gegenseitigen Kontaktflächen (64) im wesentlichen horizontal sind, um das Gewicht eines Paneels wenigstens teilweise direkt auf das andere Paneel zu entladen.

5. Bausatz nach jedem der Patentansprüche von 2 bis 4, **dadurch gekennzeichnet, dass** die Umdrehung der Paneele (1), welche dazu neigt, sie eins zu dem anderen hin zu bringen, verhindert wird.

6. Bausatz nach jedem der Patentansprüche von 2 bis 5, **dadurch gekennzeichnet, dass** die Querschnitte der beiden Halbprofile (4, 5) jeweils Ansätze (41, 51) enthalten, welche zwecks einer präzisen, zueinander rechtwinkligen Positionierung der Paneele ineinander greifen.

7. Bausatz nach Patentanspruch 5, **dadurch gekennzeichnet, dass** die Verbindungsmittel (7), welche die beiden Halbprofile (4, 5) miteinander verbinden, wenigstens die Ansätze (41, 51) enthalten.

8. Bausatz nach Patentanspruch 7, **dadurch gekennzeichnet, dass** der Ansatz (41) von einem der beiden Halbprofile (4) eine Ende (42) aufweist, welches wenigstens teilweise einer elastischen Verformung zum Einrasten in einen passenden Sitz (52) unterliegt, der in den Ansatz (51) des anderen Halbprofils (5) eingearbeitet ist, wobei gegenseitige geometrische Interferenzmittel (8) zwischen dem Ende (42) und dem passenden Sitz (52) vorhanden sind, um entsprechende Verschiebungen der Halbprofile (4, 5) in der Ebene lotrecht zu der entsprechenden Ecke (25) zu verhindern.

9. Bausatz nach Patentanspruch 8, **dadurch gekennzeichnet, dass** das Ende (42) V-förmig und mit einem freien Flügel (43) ausgebildet ist, und der passende Sitz (52) V-förmig ist, und zwar mit einem freien Flügel (53) auf der entgegengesetzten Seite zu der anderen.

10. Bausatz nach jedem der Patentansprüche von 6 bis 9, **dadurch gekennzeichnet, dass**, wenn die beiden Halbprofile (4, 5) miteinander verbunden sind, um das Verbindungsprofil (3) zu bilden, die Ansätze (41, 51) zusammen mit wenigstens einem Teil der "U"-förmigen Abschnitte (6) ein längliches, rohrförmiges Element (9) bilden.

11. Bausatz nach Patentanspruch 10, **dadurch gekennzeichnet, dass** sich das längliche, rohrförmige Element an der Aussenseite des Kraftfahrzeugkastens (2) befindet.

12. Bausatz nach Patentanspruch 10 oder 11, **dadurch gekennzeichnet, dass** das längliche, rohrförmige Element (9) aus wenigstens zwei aneinandergrenzenden länglichen, rohrförmigen Unterelementen (90) besteht, deren Trennwand (91) als Versteifungsstrebe wirkt.

13. Bausatz nach jedem der Patentansprüche von 2 bis 12, **dadurch gekennzeichnet, dass** an dem "U"-förmigen Abschnitt (6) der Querschnitt von wenigstens einem der beiden Halbprofile (4, 5) wenigstens einen Kontaktflügel (10) enthält, welcher im wesentlichen lotrecht zu der gegenseitigen Kontaktfläche (64) verläuft und zusammen mit letzterer einen Winkel (65) für den Kontakt mit dem "U"-förmigen Abschnitt (6) des anderen Halbprofils b e-schreibt.

14. Bausatz nach Patentanspruch 13, **dadurch gekennzeichnet, dass** der Kontaktflügel (10) sich auf einer Seite des Verbindungsprofils (3) befindet, welche der Innenseite (27) des zusammenzusetzenden Kraftfahrzeugkastens (2) zugewandt ist.

15. Bausatz nach Patentanspruch 13 oder 14, **dadurch gekennzeichnet, dass** der Querschnitt des anderen Halbprofils wenigstens ein Verbindungselement (12) für ein freies Ende des Kontaktflügels (10) aufweist.

16. Bausatz nach jedem der vorstehenden Patentansprüche, **dadurch gekennzeichnet, dass**, wenn die Halbprofile (4, 5) durch die gegenseitigen Verbindungsmittel (7) miteinander verbunden sind, jeder Verlauf von der Ausseneite (28) zu der Innenseite (27) des Kraftfahrzeugkastens (2) durch das Verbindungsprofil (3) auf wenigstens einen Hohlraum oder Abschnitt aus wärmeisolierendem Material trifft.

17. Bausatz nach Patentanspruch 16, **dadurch gekennzeichnet, dass** die Mittel (7) zum gegenseitigen Verbinden der Halbprofile (4, 5) zusammen mit den Halbprofilen (4, 5) wenigstens einen geschlossenen Hohlraum (14) zwischen der Aussenseite (28) und der Innenseite (27) des Kraftfahrzeugkastens (2) bilden, und die thermischen Zwischenelemente (13) wenigstens einen Abschnitt der Kante des geschlossenen Hohlraums (14) bilden.

18. Bausatz nach Patentanspruch 12, **dadurch gekennzeichnet, dass**:
- das längliche, rohrförmige Element (9) sich ausserhalb des Kraftfahrzeugkastens (2) befindet;
- jeder der "U"-förmigen Abschnitte (6) des Querschnitts der Halbprofile (4, 5) eines Verbindungsprofils (3) aus Metall und von der Aussenseite (28) zu der Innenseite (27) des Kraftfahrzeugkastens (2) durch wenigstens ein thermisches Zwischenelement (13) unterbrochen ist;
- die Kante von einem der beiden aneinandergrenzenden rohrförmigen Unterelemente (90) eine Aussenseite (66) der gegenseitigen Kontaktfläche (64) enthält und einen geschlossenen Hohlraum (14) bildet, der sich zwischen der Aussenseite (28) und der Innenseite (27) des Kraftfahrzeugskastens (2) befindet, wobei die thermischen Zwischenelemente (13) wenigstens einen Abschnitt der Kante des geschlossenen Hohlraums (14) bilden.

19. Bausatz nach Patentanspruch 17 oder 18, **dadurch gekennzeichnet, dass** das thermische Zwischenelement (13) zwischen den Seitenflügeln (61) eines jeden "U"-förmigen Abschnittes (6) angeordnet und wenigstens teilweise der elastischen Verformung unterzogen ist, was es den Seitenflügeln (61) erlaubt, gleichzeitig auseinander gezogen zu werden und das Anbringen des Halbprofils (4, 5) an dem Paneel (1) erleichtert.

20. Bausatz nach jedem der vorstehenden Patentansprüche von 1 bis 16, **dadurch gekennzeichnet, dass** der "U"-förmige Abschnitt (6) eines jeden Halbprofils (4, 5) zwischen seinen Seitenflügeln (61) wenigstens einen Abschnitt (67) enthält, welcher elastischer ist, was es den Seitenflügeln (61) erlaubt, gleichzeitig auseinander gezogen zu werden und das Anbringen des Halbprofils (4, 5) an dem Paneel (1) erleichtert.

21. Bausatz nach jedem der vorstehenden Patentansprüche, **dadurch gekennzeichnet, dass** die ersten und zweiten Seitenwände (21, 22), das Dach (23) und der Boden (24) Halbprofile (4, 5) wenigstens an ihren Seiten haben, die der Vorderwand (20) zugewandt sind, und an den beiden anschliessenden Seiten, wobei die Vorderseite (20) passende Halbprofile (4, 5) an allen vier Seiten aufweist.

22. Bausatz nach Patentanspruch 21, **dadurch gekennzeichnet, dass** die ersten und zweiten Seitenwände (21, 22), das Dach (23) und der Boden (24) ebenfalls Halbprofile (4, 5) an der Seite haben, die der hinteren Tür (26) zugewandt ist, und zwar zum Anbringen eines hinteren Rahmens, der passende Profile auf der dem Kraftfahrzeugkasten (2) zugewandten Seite enthält, sowie auf der entgegengesetzten Seite Befestigungen für die hintere Tür (26).

23. Bausatz nach Patentanspruch 21, **dadurch gekennzeichnet, dass** an der Seite, die der hinteren Tür (26) zugewandt ist, die ersten und zweiten Seitenwände (21, 22), das Dach (23) und der Boden (24) Fertigprofile (15) aufweisen, welche die Befestigungen für die hintere Tür (26) enthalten.

24. Bausatz nach Patentanspruch 23, **dadurch gekennzeichnet, dass** der Querschnitt der Fertigprofile (15) wenigstens ein "U"-förmiges Teil (151) von vorgegebener Tiefe enthält, welches Seitenflügel (152) mit einem Abstand voneinander aufweist, welcher der Dicke des Paneels (1) entspricht und einen Sitz für das Paneel (1) bildet, welcher die gesamte äussere Kante (11) des Paneels (1) hält und alle Unregelmässigkeiten, Arbeits- und Ebenheitstoleranzen auffängt, wodurch der Parallelismus zu der gegenüberliegenden, zu demselben Paneel (1) gehörenden und mit Halbprofilen (4, 5) versehenen äusseren Kante (11) gewährleistet ist.

25. Bausatz nach Patentanspruch 24, **dadurch gekennzeichnet, dass** die äussere Kante der hinteren Tür (26) durch eine wärmeisolierende Dichtung (30) abgedeckt ist, welche mit dem "U"-förmigen Teil (151) der Fertigprofile (15) im Kontakt ist, und zwar bis hin zu der Innenseite des Kraftfahrzeugkastens (2) und wenigstens über den Seitenflügel (152) hinaus und direkt das Paneel (1) berührend, wobei die Wärmeisolierung des Innenraums des Kraftfahrzeugkastens (2) von dem Aussenbereich erfolgt, wenn die hintere Tür (26) geschlossen ist.

26. Bausatz nach einem jeden der Patentansprüche von 23 bis 25, **dadurch gekennzeichnet, dass** er "L"-förmige Verstärkungs- und Versteifungsbügel (16) für den hinteren Teil (29) des Kraftfahrzeugkastens (2) enthält, die eine erste Seite (161) haben, welche in einen ersten Sitz (163) in dem Fertigprofil (15) eines horizontalen Paneels (1) eingesetzt werden kann, und eine zweite Seite (162), welche in einen zweiten Sitz (164) in dem Fertigprofil (15) eines vertikalen Paneels (1) eingesetzt werden kann, sowie Mittel (165) zum Befestigen der "L"-förmigen Bügel (16) an den Paneelen (1).

27. Bausatz nach einem jeden der Patentansprüche von 21 bis 26, **dadurch gekennzeichnet, dass** die erste Seitenwand (21) Halbprofile (4, 5) aufweist, welche untereinander gleich sind und gleich den Halbprofilen (4, 5) der zweiten Seitenwand (22), während das Dach (23) und der Boden (24) Halbprofile (4, 5) haben, welche untereinander gleich und ergänzend zu jenen der ersten und zweiten Seitenwände (21, 22) sind.

28. Bausatz nach einem jeden der Patentansprüche von 2 bis 27, **dadurch gekennzeichnet, dass** die Paneele (1) eine Struktur mit einem hohen Grad an Wärmeträgheit haben.

29. Kraftfahrzeugkasten (2) für Kraftfahrzeuge, **dadurch gekennzeichnet, dass** er aus einem Bausatz nach einem jeden der vorstehenden Patentansprüche hergestellt ist.

## Revendications

1. Ensemble d'éléments de construction en coin emboîtables pour carrosseries de camions, du type comprenant:
- des panneaux (1), substantiellement rectangulaires et avec des bords extérieurs bruts (11), les panneaux (1) étant conçus pour définir une paroi antérieure (20), un premier côté (21) et un second côté (22), un plafond (23) et un plancher (24) d'une carrosserie de camion (2) à assembler;
- des profilés de jonction (3) pour joindre entre eux les panneaux (1) en correspondance des coins (25) de la carrosserie de camion (2) à assembler;
- au moins une porte postérieure (26) pour la carrosserie de camion (2) à assembler;
- chaque profilé de jonction (3), en un coin (25) de la carrosserie de camion (2) à assembler, est divisé en deux demi-profilés séparés (4, 5), chacun d'entre eux correspondant à un des deux panneaux (1) à joindre;
- la section transversale de chaque demi-profilé (4, 5) comprend au moins une portion en forme de U (6) de profondeur prédéterminée, avec des ailes latérales (61) disposées à une distance les séparant correspondant à l'épaisseur de l'un des deux panneaux (1) à relier et formant un logement pour le panneau (1), en maintenant tout le bord externe (11) du panneau (1) et en compensant toutes les irrégularités et les tolérances d'usinage et de planéité, en garantissant un parallélisme entre les bords externes (11) opposés appartenant au même panneau (1) et pourvus de demi-profilés (4, 5);
- des moyens (7) de connexion des deux demi-profilés (4, 5);
pour créer des parois complètes de demi-profilés de bord, avec des dimensions précises, pouvant être manipulées avec précision et indépendamment et connectées entre elles rapidement et simplement pendant l'assemblage de la carrosserie de camion (2);
**caractérisé en ce que**
- chaque portion en forme de U (6) de la section transversale des demi-profilés (4, 5) relatifs à un profilé de jonction (3) est interrompue, de l'extérieur (28) à l'intérieur (27) de la carrosserie de camion (2), par au moins un élément de rupture de pont thermique (13), et **en ce que** lesdits panneaux et ladite porte postérieure sont isolés thermiquement.

2. Ensemble d'éléments selon la revendication 1, **caractérisé en ce que** dans chaque profilé de jonction (3):
- au moins une partie de l'une des deux ailes latérales (61) de la portion en forme de U (6) d'un demi-profilé (4, 5) entre directement en contact avec au moins une partie de la traverse (62) de la portion en forme de U (6) de l'autre demi-profilé (4, 5), en formant une surface de contact réciproque (64) substantiellement plate, les panneaux (1) étant au moins partiellement superposés en correspondance de leurs côtés adjacents au relatif coin (25);
- les moyens de connexion réciproque (7) préviennent substantiellement au moins les translations relatives des deux demi-profilés (4, 5) dans un plan perpendiculaire au coin (25) et, en s'association avec la surface de contact réciproque (64), préviennent au moins une direction de rotation des panneaux (1) autour d'un axe parallèle au relatif coin (25).

3. Ensemble d'éléments selon la revendication 2, **caractérisé en ce qu'**il comprend des moyens d'interférence géométrique (68) pour le coulissement d'une portion en forme de U (6) sur l'autre en correspondance de la superficie de contact réciproque (64).

4. Ensemble d'éléments selon la revendication 2 ou 3, **caractérisé en ce que**, dans les profilés de jonction (3) en correspondance des coins horizontaux (25) de la carrosserie du camion (2) à assembler, la surface de contact réciproque (64) est substantiellement horizontale, pour décharger au moins partiellement le poids d'un panneau directement sur l'autre panneau.

5. Ensemble d'éléments selon n'importe laquelle des revendications 2 à 4, **caractérisé en ce que** la rotation des panneaux (1) tendant à les porter l'un vers l'autre est empêchée.

6. Ensemble d'éléments selon n'importe laquelle des revendications 2 à 5, **caractérisé en ce que** les sections transversales des deux demi-profilés (4, 5) comprennent respectivement des appendices (41, 51) qui s'engagent entre eux pour un positionnement réciproque à angle droit de précision.

7. Ensemble d'éléments selon la revendication 5, **caractérisé en ce que** les moyens de connexion (7) qui connectent les deux demi-profilés (4, 5) entre eux comprennent au moins les appendices (41, 51).

8. Ensemble d'éléments selon la revendication 7, **caractérisé en ce que** l'appendice (41) de l'un des deux demi-profilés (4) présente une arête (42) qui est au moins partiellement sujette à une déformation élastique pour l'insertion par encliquetage dans un logement correspondant (52) réalisé dans l'appendice (51) dans l'autre demi-profilé (5), des moyens d'interférence géométrique réciproque (8) étant prévus entre l'arête (42) et le logement correspondant (52), pour prévenir les translations relatives des demi-profilés (4, 5) dans le plan perpendiculaire au coin relatif (25).

9. Ensemble d'éléments selon la revendication 8, **caractérisé en ce que** l'arête (42) est en forme de V avec une aile libre (43) et que le logement correspondant (52) est en forme de V avec une aile libre (53) sur un côté opposé à l'autre.

10. Ensemble d'éléments selon n'importe laquelle des revendications 6 à 9, **caractérisé en ce que**, lorsque les deux demi-profilés (4, 5) sont connectés pour former le profilé de jonction (3), les appendices (41, 51), avec au moins une partie des portions en forme de U (6), forment un élément tubulaire longitudinal (9).

11. Ensemble d'éléments selon la revendication 10, **caractérisé en ce que** l'élément tubulaire longitudinal est externe à la carrosserie de camion (2).

12. Ensemble d'éléments selon la revendication 10 à 11, **caractérisé en ce que** l'élément tubulaire longitudinal (9) consiste en au moins deux sous-éléments tubulaires longitudinaux (90), dont la paroi de séparation (91) agit en tant que point de raidissement.

13. Ensemble d'éléments selon n'importe laquelle des revendications 2 à 12, **caractérisé en ce que**, en correspondance de sa portion en forme de U (6), la section transversale d'au moins un des deux demi-profilés (4, 5) comprend au moins une aile de contact (10) substantiellement perpendiculaire à la surface de contact réciproque (64), en se combinant avec cette dernière pour former un angle (65) de contact avec la section en forme de U (6) de l'autre demi-profilé.

14. Ensemble d'éléments selon la revendication 13, **caractérisé en ce que** l'aile de contact (10) se trouve sur un côté du profilé de jonction (3) orienté vers l'intérieur (27) de la carrosserie de camion (2) à assembler.

15. Ensemble d'éléments selon la revendication 13 ou 14, **caractérisé en ce que** la section transversale de l'autre demi-profilé comprend au moins un autre élément de connexion (12) pour une extrémité libre de l'aile de contact (10).

16. Ensemble d'éléments selon n'importe laquelle des revendications précédentes, **caractérisé en ce que**, lorsque les demi-profilés (4, 5) sont connectés entre eux par les moyens de connexion réciproque (7), tout chemin de l'extérieur (28) à l'intérieur (27) de la carrosserie de camion (2) au travers du profilé de jonction (3) rencontre au moins une cavité ou section de matériau d'isolation thermique.

17. Ensemble d'éléments selon la revendication 16, **caractérisé en ce que** les moyens (7) de connexion réciproque des demi-profilés (4, 5), ainsi que les demi-profilés (4, 5) forment au moins une cavité fermée (14), entre l'extérieur (28) et l'intérieur (27) de la carrosserie de camion (2), et que les éléments de rupture de pont thermique (13) forment au moins une section du bord de la cavité fermée (14).

18. Ensemble d'éléments selon la revendication 12, **caractérisé en ce que**:
- l'élément tubulaire longitudinal (9) se trouve à l'extérieur de la carrosserie de camion (2);
- chacune des portions en forme de U (6) de la section transversale des demi-profilés (4, 5) d'un profilé de jonction (3) est métallique et est interrompue, de l'extérieur (28) à l'intérieur (27) de la carrosserie de camion (2), par au moins un élément de rupture de pont thermique (13);
- le bord de l'un des deux sous-éléments tubulaires adjacents (90) contient un côté externe (66) de la surface de contact réciproque (64) et forme une cavité fermée (14), se trouvant entre l'extérieur (28) et l'intérieur (27) de la carrosserie de camion (2), les éléments de rupture de pont thermique (13) formant au moins une section du bord de la cavité fermée (14).

19. Ensemble d'éléments selon la revendication 17 ou 18, **caractérisé en ce que** l'élément de rupture de pont thermique (13) est situé entre les ailes latérales (61) de chaque portion en forme de U (6) et est partiellement sujet à une déformation élastique, permettant aux ailes latérales (61) d'être écartées temporairement et facilitant l'application des demi-profilés (4, 5) sur le panneau (1).

20. Ensemble d'éléments selon n'importe laquelle des revendications précédentes 1 à 16, **caractérisé en ce que**, entre ses ailes latérales (61), la portion en forme de U (6) de chaque demi-profilé (4, 5) comprend au moins une section plus élastique (67), permettant aux ailes latérales (61) d'être écartées temporairement et facilitant l'application des demi-profilés (4, 5) sur le panneau (1).

21. Ensemble d'éléments selon n'importe laquelle des revendications précédentes, **caractérisé en ce que** les premiers et seconds côtés (21, 22), le plafond (23) et le plancher (24) sont pourvus de demi-profilés (4, 5) au moins sur leurs côtés orientés vers la paroi antérieure (20) et sur les deux côtés consécutifs à cette dernière, la partie frontale (20) ayant des demi-profilés complémentaires (4, 5) sur les quatre côtés.

22. Ensemble d'éléments selon la revendication 21, **caractérisé en ce que** le premier et le second côté (21, 22), le plafond (23) et le plancher (24) sont pourvus de demi-profilés (4, 5) également sur le côté orienté vers la porte postérieure (26), pour une connexion avec un châssis postérieur supportant des sections correspondantes sur la face orientée vers la carrosserie (2) et des accouplements pour la porte postérieure (26) sur la face opposée.

23. Ensemble d'éléments selon la revendication 21, **caractérisé en ce que**, sur le côté orienté vers la porte postérieure (26), les premiers et seconds côtés (21, 22), le plafond (23) et le plancher (24) présentent des profilés de finition (15) supportant des accouplements pour la porte postérieure (26).

24. Ensemble d'éléments selon la revendication 23, **caractérisé en ce que** la section transversale des profilés de finition (15) comprend au moins une partie en forme de U (151) de profondeur déterminée, pourvue d'ailes latérales (152) à une distance l'une de l'autre correspondant à l'épaisseur du panneau (1) et formant un logement pour ce dernier, en maintenant au moins tout le bord extérieur (11), en absorbant toutes les irrégularités et les tolérances d'usinage et de planéité, en garantissant un parallélisme avec le bord extérieur (11) opposé appartenant au même panneau (1) et portant un demi-profilé (4, 5).

25. Ensemble d'éléments selon la revendication 24, **caractérisé en ce que** le bord extérieur de la porte postérieure (26) est couvert par un joint d'isolation thermique (30) qui entre en contact avec la partie en forme de U (151) des profilés de finition (15) jusqu'à l'intérieur de la carrosserie de camion (2) au moins au-delà de l'aile latérale (152) et jusqu'à toucher le panneau (1) directement, en fournissant ainsi une isolation thermique pour l'intérieur de la carrosserie de camion (2) par rapport à l'extérieur lorsque la porte postérieure (26) est fermée.

26. Ensemble d'éléments selon n'importe laquelle des revendications 23 à 25, **caractérisé en ce qu'**il comprend des équerres en forme de L de renfort et de raidissement (16) pour la partie postérieure (29) de la carrosserie de camion (2), pourvues d'un premier côté (161) pouvant être inséré dans un premier logement (163) dans la section de finition (15) d'un panneau horizontal (1) et un second côté (162) pouvant être inséré dans un second logement (164) dans la section de finition (15) d'un panneau vertical (1), ainsi que des moyens (165) de fixation des équerres en forme de L (16) sur les panneaux (1).

27. Ensemble d'éléments selon n'importe laquelle des revendications 21 à 27, **caractérisé en ce que** le premier côté (21) présente des demi-profilés (4, 5) qui sont identiques entre eux et identiques à des demi-profilés (4, 5) du second côté (22), alors que le plafond (23) et le plancher (24) présentent des demi-profilés (4, 5) identiques entre eux et complémentaires de ceux des premiers et seconds côtés (21,22).

28. Ensemble d'éléments selon n'importe laquelle des revendications 2 à 27, **caractérisé en ce que** les panneaux (1) présentent une structure à inertie thermique élevée.

29. Carrosserie de camion (2), **caractérisée en ce qu'**elle est réalisée par assemblage d'un ensemble d'éléments selon n'importe laquelle des revendications précédentes.
